(19) 

(11) **EP 4 603 880 B1**

(12) **EUROPEAN PATENT SPECIFICATION**

(45) Date of publication and mention of the grant of the patent:
**23.09.2026 Bulletin 2026/39**

(21) Application number: **23914798.6**

(22) Date of filing: **26.12.2023**

(51) International Patent Classification (IPC):
***G02F 1/1335*** $^{(2006.01)}$ ***G02F 1/13357*** $^{(2006.01)}$
***G02B 5/02*** $^{(2006.01)}$ ***F21S 2/00*** $^{(2016.01)}$
***F21V 3/00*** $^{(2015.01)}$ ***F21Y 115/10*** $^{(2016.01)}$

(52) Cooperative Patent Classification (CPC):
**G02F 1/133606; G02B 5/0231; G02F 1/133603;**
G02B 5/0278; G02B 5/045; G02F 1/133614;
G02F 1/133617; G02F 2202/36

(86) International application number:
**PCT/JP2023/046575**

(87) International publication number:
**WO 2024/147312 (11.07.2024 Gazette 2024/28)**

(54) **LIGHT-DIFFUSING SHEET, BACKLIGHT UNIT, LIQUID CRYSTAL DISPLAY DEVICE, AND INFORMATION APPARATUS**

LICHTSTREUENDE FOLIE, RÜCKBELEUCHTUNGSEINHEIT, FLÜSSIGKRISTALLANZEIGEVORRICHTUNG UND INFORMATIONSVORRICHTUNG

FEUILLE DE DIFFUSION DE LUMIÈRE, UNITÉ DE RÉTROÉCLAIRAGE, DISPOSITIF D’AFFICHAGE À CRISTAUX LIQUIDES ET APPAREIL D’INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.01.2023 JP 2023000424**
**25.12.2023 JP 2023217551**

(43) Date of publication of application:
**20.08.2025 Bulletin 2025/34**

(73) Proprietor: **KEIWA Incorporated**
**Tokyo 103-0025 (JP)**

(72) Inventor: **TSAI, Chengheng**
**Tokyo 103-0025 (JP)**

(74) Representative: **Becker Kurig & Partner Patentanwälte mbB**
**Bavariastraße 7**
**80336 München (DE)**

(56) References cited:
**EP-A1- 2 058 680** **WO-A1-2008/026540**
**JP-A- 2018 163 357** **JP-A- 2022 183 047**
**JP-A- 2022 183 047** **JP-A- 2022 189 735**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 603 880 B1

## Description

Technical Field

The present disclosure relates to a light-diffusing sheet, a backlight unit, a liquid crystal display device, and an information apparatus.

Background Art

Liquid crystal display devices (liquid crystal displays) are widely used as display devices in various information apparatuses such as smartphones and tablet terminals. Direct-type systems in which a light source is arranged on a rear surface of a liquid crystal panel are predominantly used as backlights of liquid crystal display devices.

In a direct-type backlight, a light-diffusing sheet is used to diffuse light from a light source such as an LED (Light Emitting Diode) and thereby increase uniformity of brightness and chromaticity over the entire screen (see Patent Literature 1). In thin displays such as laptops and tablet terminals, light is often diffused by providing inverted pyramid-shaped recesses on one surface of the light-diffusing sheet.

Citation List

Patent Literature 1: Japanese Patent Application Publication No. 2011-76115

EP 2 058 680 A1 discloses a light diffusing sheet to be incorporated in a backlight unit of a liquid-crystal display in which the light diffusing sheet is directly illuminated by linear light sources disposed under the light diffusing sheet. JP 2022 183047 A discloses a light diffusion sheet in which a plurality of recesses having a substantially inverted quadrangular pyramid shape are provided on a first surface of the light diffusion sheet.

Summary of Invention

Technical Problem

The light-diffusing sheet is required to have a light diffusion performance (a brightness uniformity) with which the entire screen of the liquid crystal display appears to emit light uniformly even when LEDs are arranged in a distributed manner directly below the screen, and is required to improve the brightness of the screen in order to reduce the energy consumption of the liquid crystal display. However, in the light-diffusing sheet, there is generally a trade-off relationship between improving the brightness uniformity and improving the brightness.

An object of the present disclosure is to provide a light-diffusing sheet capable of improving the brightness while maintaining the brightness uniformity.

The present invention is provided in the appended claims. The following disclosure serves a better understanding of the present invention.

To achieve the object described above, a light-diffusing sheet according to the present disclosure has a first surface on which a plurality of first recesses with an inverted substantially square pyramid shape are provided, and a second surface on which a plurality of second recesses with an inverted substantially square pyramid shape are provided. An apex angle of the plurality of first recesses is 75° or more and 105° or less, and an apex angle of the plurality of second recesses is 105° or more and 175° or less.

With the light-diffusing sheet according to the present disclosure, the brightness can be improved while maintaining the brightness uniformity by a multiple reflection action of light between the first surface provided with the first recesses having an inverted substantially square pyramid shape with an apex angle of 75° or more and 105° or less, and the second surface provided with the second recesses having an inverted substantially square pyramid shape with an apex angle of 105° or more and 175° or less.

Note that in the present disclosure, the term "light-diffusing sheet" is assumed to include a plate-shaped "light-diffusing plate" and a film-shaped "light-diffusing film".

In the light-diffusing sheet according to the present disclosure, when the apex angle of the plurality of first recesses is 80° or more and 100° or less, the brightness uniformity can be further improved.

In the light-diffusing sheet according to the present disclosure, when the apex angle of the plurality of second recesses is 110° or more and 170° or less, and preferably 120° or more and 160° or less, the brightness uniformity can be further improved.

In the light-diffusing sheet according to the present disclosure, the arrangement pitch of the plurality of first

recesses may be 200 μm or more, and the depth of the plurality of first recesses may be deeper than the depth of the plurality of second recesses. By providing large first recesses having an inverted substantially square pyramid shape with an apex angle of 75° or more and 105° or less in this manner, it is possible to promote brightness uniformity while suppressing brightness reductions.

A backlight unit according to the present disclosure is built into a liquid crystal display device for guiding light emitted from the plurality of light sources toward a display screen, and includes the light-diffusing sheet according to the present disclosure, described above, which is provided between the display screen and the plurality of light sources.

With the backlight unit according to the present disclosure, since the light-diffusing sheet that is capable of improving the brightness while maintaining the brightness uniformity is used, it is possible to display a bright screen with excellent brightness uniformity.

In the backlight unit according to the present disclosure, the plurality of light sources may be blue light sources, and a color conversion sheet for converting the wavelength of the light may be provided between the display screen and the plurality of light sources. Thus, the cost of the backlight unit can be reduced as compared with a case in which white light sources are used. Note that when the color conversion sheet is disposed between the display screen and the light-diffusing sheet, the light-diffusing sheet is arranged with the second surface facing the color conversion sheet (i.e., with the first surface as the light entrance surface), whereby the brightness is improved while maintaining the brightness uniformity. Meanwhile, when the color conversion sheet is arranged between the light-diffusing sheet and the plurality of light sources, the light-diffusing sheet is arranged with the second surface facing the color conversion sheet (i.e., with the first surface as the light emission surface), whereby the brightness is improved while maintaining the brightness uniformity.

A liquid crystal display device according to the present disclosure includes the backlight unit according to the present disclosure, described above, and a liquid crystal display panel.

Since the liquid crystal display device according to the present disclosure includes the backlight unit according to the present disclosure, described above, it is possible to display a bright screen with excellent brightness uniformity.

An information apparatus according to the present disclosure includes the liquid crystal display device according to the present disclosure, described above.

Since the information apparatus according to the present disclosure includes the liquid crystal display device according to the present disclosure, described above, it is possible to display a bright screen with excellent brightness uniformity.

Note that in the light-diffusing sheet according to the present disclosure, the apex angle of the plurality of first recesses is set at 75° or more and 105° or less, and the apex angle of the plurality of second recesses is set at 105° or more and 175° or less, but instead, the apex angle of the plurality of first recesses may be set at 75° or more and 105° or less, and the apex angle of the plurality of second recesses may be set at 60° or more and 175° or less, and preferably 95° or more and 175° or less. Thus, the brightness can be improved while securing a practical level of brightness uniformity. Alternatively, in the light-diffusing sheet according to the present disclosure, the apex angle of the plurality of first recesses may be set at 75° or more and 115° or less, and the apex angle of the plurality of second recesses may be set at 65° or more and 155° or less. Thus, the brightness can be further improved while securing a practical level of brightness uniformity.

## Advantageous Effects of Invention

According to the present disclosure, it is possible to provide a light-diffusing sheet capable of improving brightness while maintaining brightness uniformity, as well as a backlight unit using the light-diffusing sheet, a liquid crystal display device, and an information apparatus.

## Brief Description of Drawings

FIG. 1 is a sectional view of a liquid crystal display device according to an embodiment.

FIG. 2 is a sectional view of a backlight unit according to the embodiment.

FIG. 3 is a sectional view showing an example configuration of a light-diffusing sheet (single-surface pyramids) according to the embodiment.

FIG. 4 is a sectional view showing an example configuration of a light-diffusing sheet (double-surface pyramids) according to the embodiment.

FIG. 5 is a perspective view of the light-diffusing sheet according to the embodiment.

FIG. 6 is a view showing a planar configuration and a cross-sectional configuration of a recess provided in the light-diffusing sheet according to the embodiment.

## Description of Embodiments

(Embodiment)

A light-diffusing sheet, a backlight unit, a liquid crystal display device, and an information apparatus according to an embodiment will be described below with reference to the drawings. It should be noted that the scope of the present disclosure is not limited to the embodiment described below, and any desired modifications can be made within the scope of the technical concept of the present disclosure.

<Liquid crystal display device>

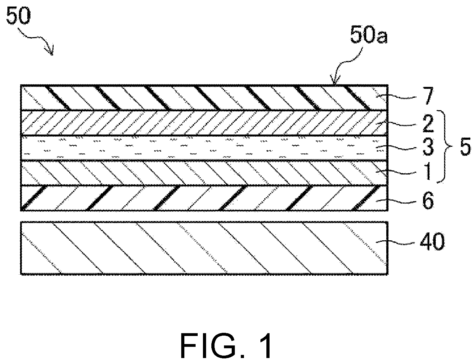

FIG. 1 shows an example of a sectional configuration of a liquid crystal display device according to the embodiment.

As shown in FIG. 1, a liquid crystal display device 50 includes a liquid crystal display panel 5, a first polarizing plate 6 adhered to a lower surface of the liquid crystal display panel 5, a second polarizing plate 7 adhered to an upper surface of the liquid crystal display panel 5, and a backlight unit 40 provided on a back surface side of the liquid crystal display panel 5 via the first polarizing plate 6. The liquid crystal display panel 5 includes a TFT substrate 1 and a CF substrate 2, which are provided so as to face each other, a liquid crystal layer 3 provided between the TFT substrate 1 and the CF substrate 2, and a sealing material (not shown) provided in a frame shape between the TFT substrate 1 and the CF substrate 2 in order to seal the liquid crystal layer 3.

The shape of a display screen 50a of the liquid crystal display device 50 as seen from the front (above in FIG. 1) may be rectangular or square, or may be any desired shape, such as a rectangular shape with rounded corners, an elliptical, circular, or trapezoidal shape, or the shape of an instrument panel of an automobile.

In the liquid crystal display device 50, a voltage of a predetermined magnitude is applied to the liquid crystal layer 3 in each sub-pixel corresponding to each pixel electrode in order to change the alignment state of the liquid crystal layer 3. Thus, the transmittance of light that enters from the backlight unit 40 through the first polarizing plate 6 is adjusted. The light having the adjusted transmittance is emitted through the second polarizing plate 7, whereby an image is displayed.

The liquid crystal display device 50 according to this embodiment is used as a display device built into any of various information apparatuses (for example, an in-vehicle device for car navigation or the like, a personal computer, a mobile phone, a portable information terminal, a portable game machine, a copy machine, a ticket vending machine, or an automated teller machine).

For example, the TFT substrate 1 includes a plurality of TFTs provided in a matrix pattern on a glass substrate, an interlayer insulating film provided so as to cover the TFTs, a plurality of pixel electrodes provided in a matrix pattern on the interlayer insulating film and respectively connected to the plurality of TFTs, and an alignment film provided so as to cover the pixel electrodes. For example, the CF substrate 2 includes a black matrix provided in a grid pattern on a glass substrate, a color filter including a red layer, a green layer, and a blue layer respectively provided between the grids of the black matrix, a common electrode provided so as to cover the black matrix and the color filter, and an alignment film provided so as to cover the common electrode. The liquid crystal layer 3 is constituted by a nematic liquid crystal material or the like containing liquid crystal molecules with electro-optic characteristics. For example, the first polarizing plate 6 and the second polarizing plate 7 include a polarizer layer with a polarizing axis in one direction and a pair of protection layers provided so as to sandwich the polarizer layer.

<Backlight unit>

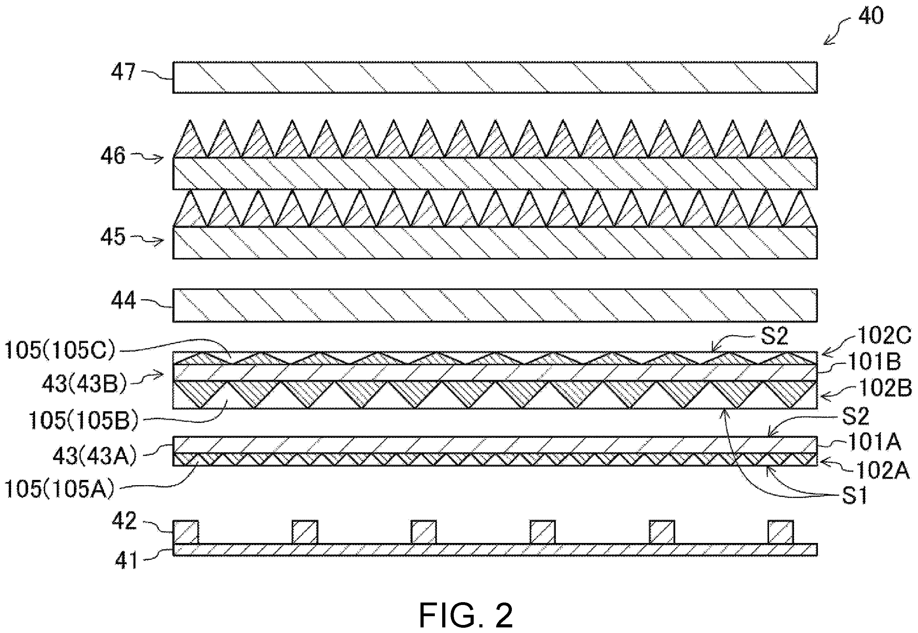

FIG. 2 shows an example of a sectional configuration of the backlight unit according to the embodiment.

As shown in FIG. 2, the backlight unit 40 mainly includes a plurality of light sources 42 and a light-diffusing sheet 43 provided on the upper side of the light sources 42. The plurality of light sources 42 may be arranged two-dimensionally on a reflective sheet 41. The light sources 42 may be, for example, white light sources or blue light sources. A plurality of light-diffusing sheets 43 may be arranged. In this example, as the light-diffusing sheet 43, a first light-diffusing sheet 43A and a second light-diffusing sheet 43B are laminated and arranged in order from the side closer to the light sources 42. A plurality of recesses 105 (recesses 105A) having an inverted substantially square pyramid shape are provided on a light entrance surface of the first light-diffusing sheet 43A, and a light emission surface of the first light-diffusing sheet 43A is a matte surface or a flat surface. A plurality of recesses 105 (first recesses 105B and second recesses 105C) having an inverted substantially square pyramid shape are provided respectively on the light entrance surface and the light emission surface of the second light-diffusing sheet 43B. Details of the light-diffusing sheet 43 will be provided below.

In this example, since blue light sources are used as the light sources 42, a color conversion sheet 44 is disposed on the upper side of the light-diffusing sheet 43. The color conversion sheet 44 converts the color of the light emitted by the light sources 42. The color conversion sheet 44 may be disposed between the light-diffusing sheet 43 and the light sources 42, or may be disposed between the light-diffusing sheets 43.

A first prism sheet 45 and a second prism sheet 46 may be arranged in order on the upper side of the light-diffusing

sheet 43 as a brightness enhancing sheet for enhancing the brightness. An upper light-diffusing sheet 47 may be disposed on the upper side of the second prism sheet 46 in order to suppress brightness unevenness caused by the prism sheets 45 and 46.

[Reflective sheet]

The reflective sheet 41 is constituted by a film made of white polyethylene terephthalate resin, a silver-deposited film, or the like, for example.

[Light sources]

The type of the light sources 42 is not particularly limited, and the light sources 42 may be LED elements, laser elements, or the like, for example. From the viewpoints of cost, productivity, and so on, LED elements may be used. The light sources 42 may have a rectangular shape when seen in plan view, and in this case, the length of one side may be 10 μm or more (preferably, 50 μm or more) and 10 mm or less (preferably, 5 mm or less). When LED elements are used as the light sources 42, a plurality of LED elements (LED chips) may be arranged on the reflective sheet 41 at fixed intervals in a two-dimensional matrix pattern. A lens may be mounted on the LED element serving as the light source 42 in order to adjust the emission angle characteristic of the LED element. While the number of arranged light sources 42 is also not particularly limited, when the plurality of light sources 42 are arranged in a distributed manner, the light sources 42 are preferably arranged regularly on the reflective sheet 41. Regularly arranged means arranged with a fixed regularity, and for example corresponds to a case in which the light sources 42 are arranged at equal intervals. When the light sources 42 are arranged at equal intervals, a center-to-center distance between two adjacent light sources 42 may be 0.5 mm or more (preferably, 2 mm or more) and 20 mm or less.

When the light sources 42 are blue light sources, a blue LED element that emits light of $x < 0.24$ and $y < 0.18$, for example, in terms of the CIE1931 chromaticity coordinates may be used. When the light sources 42 are white light sources, the white light source may be constituted by an LED element with a peak wavelength in the blue region, an LED element with a peak wavelength in the green region, and an LED element with a peak wavelength in the red region, and may emit light of $0.24 < x < 0.42$ and $0.18 < y < 0.48$, for example, in terms of the CIE1931 chromaticity coordinates.

[Light-diffusing sheet]

The light-diffusing sheet 43 diffuses light rays entering from the light sources 42. In the backlight unit 40 shown in FIG. 2, a configuration using two light-diffusing sheets 43, or more specifically a configuration in which the first light-diffusing sheet 43A and the second light-diffusing sheet 43B are laminated and arranged from the side closer to the light sources 42, is illustrated. However, instead of this configuration, the second light-diffusing sheet 43B and the first light-diffusing sheet 43A may be laminated and arranged from the side closer to the light sources 42. Alternatively, the second light-diffusing sheet 43B may be used alone as the light-diffusing sheet 43, or three or more light-diffusing sheets 43 including the second light-diffusing sheet 43B may be laminated and used.

The matrix resin constituting the light-diffusing sheet 43 is not particularly limited as long as the matrix resin is constituted by a material that transmits light, and for example, polycarbonate, acrylic, polystyrene, MS (methyl methacrylate-styrene copolymer) resin, polyethylene terephthalate, polyethylene naphthalate, cellulose acetate, polyimide, and so on may be used. The thickness of the light-diffusing sheet 43 is also not particularly limited, and may be, for example, 50 μm or more and 3 mm or less. When the thickness of the light-diffusing sheet 43 exceeds 3 mm, it becomes difficult to achieve a thin liquid crystal display, whereas when the thickness of the light-diffusing sheet 43 falls below 50 μm, it becomes difficult to obtain a sufficient light diffusion effect. When a plurality of light-diffusing sheets 43 are used, the total thickness may be around several hundred μm to several mm. The light-diffusing sheet 43 may be in the form of a film or a plate. The configuration and manufacturing method of the light-diffusing sheet 43 will be described in further detail below.

[Color conversion sheet]

The color conversion sheet 44 converts light (for example, blue light) from the light sources 42 into light having a wavelength of a desired color (for example, green or red) as a peak wavelength. For example, the color conversion sheet 44 converts blue light having a wavelength of 450 nm into green light having a wavelength of 540 nm and red light having a wavelength of 650 nm. In this case, when light sources 42 that emit blue light having a wavelength of 450 nm are used, the blue light is partially converted into green light and red light by the color conversion sheet 44, so that the light transmitted through the color conversion sheet 44 becomes white light. A QD (quantum dot) sheet, a fluorescent sheet, or the like, for example, may be used as the color conversion sheet 44.

A wavelength selection sheet may be further disposed on the lower side of the color conversion sheet 44. The

wavelength selection sheet selectively transmits light having the emission wavelength of the light sources 42 (for example, blue light) and reflects light of other wavelengths. Thus, light having a wavelength that has been changed by the color conversion sheet 44 can only advance upward from the color conversion sheet 44.

The color conversion sheet 44 can be disposed in any position between the first prism sheet 45 and the light sources 42. When white light sources are used as the light sources 42, the color conversion sheet 44 is not required to be disposed.

[Prism sheets]

The first prism sheet 45 and the second prism sheet 46 refract light rays entering from the light-diffusing sheet 43 in a normal direction. For example, a plurality of groove lines with an isosceles triangle-shaped cross-section are provided adjacent to each other on the respective light emission surfaces of the prism sheets 45 and 46, and prisms are formed from triangular column parts sandwiched between adjacent pairs of groove lines. The apex angle of the prism is around 90°, for example. The groove lines formed in the first prism sheet 45 and the groove lines formed in the second prism sheet 46 may be arranged so as to be orthogonal to each other. Thus, light rays entering from the light-diffusing sheet 43 can be refracted in the normal direction by the first prism sheet 45, and light rays emitted from the first prism sheet 45 can be refracted by the second prism sheet 46 so as to advance substantially perpendicularly to the light entrance surface of the upper light-diffusing sheet 47. The prism sheets 45 and 46 may be laminated as separate bodies or may be formed integrally. The total thickness of the prism sheets 45 and 46 may be around 100-400 μm, for example. A PET (polyethylene terephthalate) film in which prism shapes are formed using a UV-curable acrylic resin, for example, may be used as the prism sheets 45 and 46.

In this example, the two prism sheets 45 and 46 are used as the brightness enhancing sheet, but one prism sheet may be used instead. Alternatively, another type of brightness enhancing sheet that can increase the brightness of the light emitted from the light sources 42 may be used. In this case, the brightness enhancing sheet may increase the brightness by consolidating light rays using double reflection and the refractive index of the light as the light passes through the sheet. Alternatively, the brightness enhancing sheet may increase the brightness by recycling an S-wave that does not pass through the first polarizing plate 6 of the liquid crystal display device 50 and converting the recycled S-wave into a P-wave that passes through the first polarizing plate 6. Note that if a sufficient brightness enhancing effect cannot be obtained by the prism sheets 45 and 46, another brightness enhancing sheet may be further disposed on the upper side of the second prism sheet 46.

[Upper light-diffusing sheet]

The upper light-diffusing sheet 47 slightly diffuses the light rays entering from the second prism sheet 46 so as to suppress brightness unevenness due to the shape of the prism portions of the prism sheets 45 and 46 or the like. The upper light-diffusing sheet 47 may be directly laminated onto the front surface of the second prism sheet 46. The thickness of the upper light-diffusing sheet 47 is not particularly limited, but may be, for example, 50 μm or more and 3 mm or less. When the thickness of the upper light-diffusing sheet 47 exceeds 3 mm, it becomes difficult to achieve a thin liquid crystal display, whereas when the thickness of the upper light-diffusing sheet 47 falls below 50 μm, it becomes difficult to obtain a sufficient light diffusion effect. The upper light-diffusing sheet 47 may be in the form of a film or a plate. The upper light-diffusing sheet 47 may be configured to include a base material layer and a light-diffusing layer that is laminated on the light emission surface of the base material layer and contains a resin matrix and resin beads. Alternatively, the upper light-diffusing sheet 47 may be, for example, a PET film having an uneven shape provided on at least one surface thereof using a UV-curable acrylic resin.

<Detailed configuration of light-diffusing sheet>

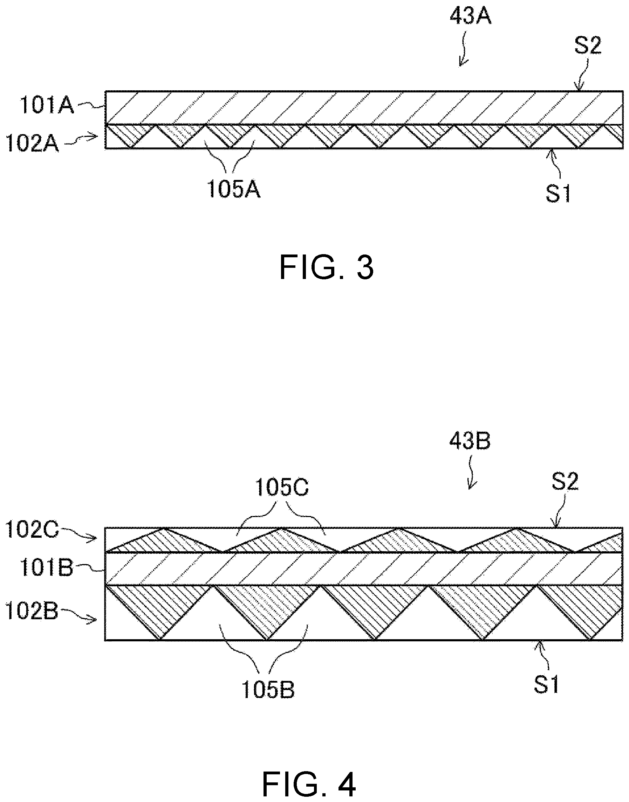

As shown in FIG. 3, the first light-diffusing sheet 43A mainly includes a base material layer 101A and a light-diffusing layer 102A provided on the base material layer 101A. The first light-diffusing sheet 43A has a first surface (the front surface of the light-diffusing layer 102A) S1 that serves as the light entrance surface, and a second surface (the front surface of the base material layer 101A) S2 that serves as the light emission surface. The light-diffusing layer 102A is provided with a plurality of recesses 105A having an uneven shape, or more specifically an inverted substantially square pyramid shape (an inverted pyramid shape), for diffusing light. The second surface S2 of the first light-diffusing sheet 43A may be, for example, a matte surface or a flat surface. The first light-diffusing sheet 43A may be arranged so that the first surface S1 serves as the light emission surface and the second surface S2 serves as the light entrance surface.

As shown in FIG. 4, the second light-diffusing sheet 43B mainly includes a base material layer 101B, a first light-diffusing layer 102B provided on one surface of the base material layer 101B, and a second light-diffusing layer 102C provided on the other surface of the base material layer 101B. The second light-diffusing sheet 43B has a first surface (the

front surface of the first light-diffusing layer 102B) S1 that serves as the light entrance surface, and a second surface (the front surface of the second light-diffusing layer 102C) S2 that serves as the light emission surface. The first light-diffusing layer 102B is provided with a plurality of first recesses 105B having an uneven shape, or more specifically an inverted substantially square pyramid shape (an inverted pyramid shape), for diffusing light. The second light-diffusing layer 102C is provided with a plurality of second recesses 105C having an uneven shape, or more specifically an inverted substantially square pyramid shape (an inverted pyramid shape), for diffusing light.

[Base material layer]

The base material layers 101A and 101B (hereinafter, also referred to collectively as the base material layer 101) are required to transmit light rays, and are therefore formed using a transparent (for example, colorless transparent) synthetic resin as the main component. The main component of the base material layer 101 is not particularly limited, and for example, polycarbonate, polyethylene terephthalate, polyethylene naphthalate, acrylic resin, polystyrene, polyolefin, cellulose acetate, weather-resistant vinyl chloride, or the like may be used. Note that the term "main component" refers to the component having the highest content, for example, a component having a content of 50% by mass or more. The base material layer 101 may contain a diffusing agent or other additives, or may contain substantially no additives. The additives that can be included are not particularly limited, and may be inorganic particles of silica, titanium oxide, aluminum hydroxide, barium sulfate, or the like, for example, or organic particles of acrylic, acrylonitrile, silicone, polystyrene, polyamide, or the like, for example.

The lower limit of the average thickness of the base material layer 101 is preferably around 10 μm, more preferably around 35 μm, and even more preferably around 50 μm. The upper limit of the average thickness of the base material layer 101 is preferably around 500 μm, more preferably around 250 μm, and even more preferably around 180 μm. When the average thickness of the base material layer 101 is less than the lower limit, there is a risk of curling occurring when the light-diffusing layers 102A, 102B, and 102C are formed. Conversely, when the average thickness of the base material layer 101 exceeds the upper limit, the brightness of the liquid crystal display device 50 may decrease, and it may become difficult to make the liquid crystal display device 50 thin. It should be noted that term "average thickness" refers to an average value of the thickness at any ten points.

[Light-diffusing layer]

The light-diffusing layers 102A, 102B, and 102C (hereinafter, also referred to collectively as the light-diffusing layer 102) are required to transmit light rays, and are therefore formed using a transparent (for example, colorless transparent) synthetic resin as the main component. For example, the light-diffusing layer 102 may be molded integrally with the base material layer 101 during extrusion molding of a base material resin forming the base material layer 101, or may be molded separately using a UV-curable resin after molding the base material layer 101.

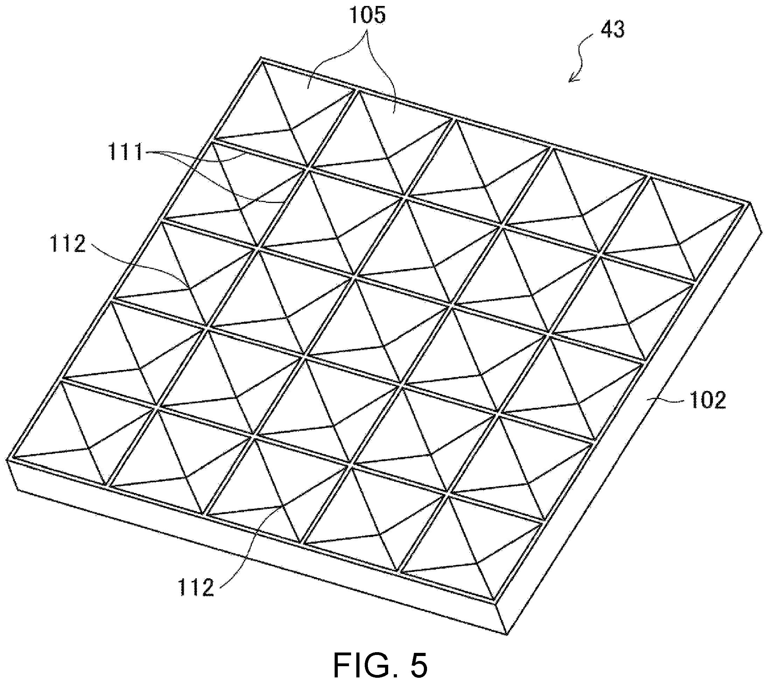

As shown in FIG. 5, for example, the pluralities of recesses 105A, 105B, and 105C (hereinafter, referred to collectively as the recesses 105) having an inverted substantially square pyramid shape (an inverted pyramid shape) and provided respectively on the light-diffusing layers 102A, 102B, and 102C may be arranged in a two-dimensional matrix pattern. In other words, the plurality of recesses 105 may be arranged along two mutually orthogonal directions. Adjacent recesses 105 are partitioned by ridge lines 111. The ridge lines 111 extend along the two directions in which the recesses 105 are arranged. The arrangement pitch of the recesses 105 may be, for example, around 50 μm or more and around 500 μm or less. A center (the apex of the inverted pyramid) 112 of the recess 105 is the deepest portion of the recess 105. The center (the deepest part) 112 of the recess 105 may reach the base material layer 101. In other words, the depth of the recess 105 may be set to be equal to the thickness of the light-diffusing layer 102. Note that although FIG. 5 illustrates a state in which the recesses 105 are arranged in a 5×5 matrix pattern for the sake of simplicity, the number of actually arranged recesses 105 is significantly larger.

In this example, the inverted pyramid-shaped (inverted substantially square pyramid-shaped) recesses 105 are arranged in a two-dimensional matrix pattern so as to form an uneven shape, but as long as the actions and effects of the present invention are not lost, the recesses 105 may be arranged randomly. When the recesses 105 are regularly arranged two-dimensionally, gaps may be provided between the recesses 105, but do not have to be. The recess 105 may have an inverted substantially polygonal pyramid shape other than an inverted substantially square pyramid shape. For example, the "inverted polygonal pyramid" shape of the recess 105 may be an inverted triangular pyramid or an inverted hexagonal pyramid that can be arranged two-dimensionally without gaps, similarly to an inverted square pyramid. When the "inverted polygonal pyramid" shape of the recess 105 is an inverted square pyramid, it is easy to improve the accuracy of a surface cutting operation of a metal mold (a metal roll) used in a manufacturing process, such as extrusion molding or injection molding, for providing the recesses 105.

While the term "inverted substantially polygonal pyramid" is used in the present disclosure in consideration of the fact that it is difficult to form geometrically strict inverted polygonal pyramid-shaped recesses using ordinary shape transfer

techniques, it is assumed that the term "inverted substantially polygonal pyramid" includes shapes that can be regarded as a true or substantially true inverted polygonal pyramid. In addition, the term "substantially" means "can be approximated" and, for example, an "inverted substantially square pyramid" refers to a shape that can approximate an inverted square pyramid. For example, likewise with regard to an "inverted polygonal truncated pyramid" having a flat top, as long as the actions and effects of the present invention are not lost, a shape having a small top area is also assumed to be included as an "inverted substantially polygonal pyramid". Furthermore, shapes that are deformed from an "inverted polygonal pyramid" within the range of inevitable shape variability due to machining accuracy in industrial production are also included as an "inverted substantially polygonal pyramid".

[Inverted pyramid-shaped recess]

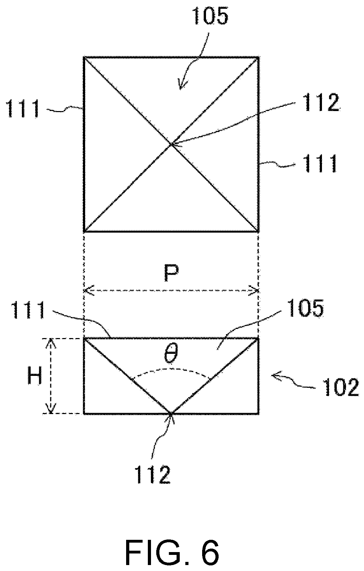

An apex angle θ of the inverted pyramid-shaped recesses 105A provided on the first surface S1 of the first light-diffusing sheet 43A may be, for example, around 70° or more and around 90° or less. As shown in FIG. 6, the apex angle θ of the recess 105 is an angle formed by inclined surfaces of the recesses 105 in a cross-section (the lower diagram in FIG. 6) that appears when the recesses 105 are cut so as to perpendicularly cross a pair of ridge lines 111 that pass through the apex 112 of the inverted pyramid and face each other across the apex 112 in a plane (a vertical cross-section) that is perpendicular to the placement surface (a horizontal plane) of the light-diffusing sheet 43. Note that the upper diagram of FIG. 6 shows the planar configuration of the recess 105. Furthermore, in FIG. 6, "H" denotes the depth of the recess 105 (the height of the pyramid shape), and "P" denotes the horizontal width of the recess 105 (in other words, the arrangement pitch of the recesses 105). The depth H of the recess 105 is determined by the arrangement pitch P of the recesses 105 and the apex angle θ of the recess 105.

On the second light-diffusing sheet 43B, the apex angle θ of the inverted pyramid-shaped first recesses 105B provided on the first surface S1 is set to be 75° or more and 105° or less, and preferably 80° or more and 100° or less, and the apex angle θ of the inverted pyramid-shaped second recesses 105C provided on the second surface S2 is 105° or more and 175° or less, preferably 110° or more and 170° or less, and more preferably 120° or more and 160° or less. In other words, the apex angle θ of the second recess 105C is larger than the apex angle θ of the first recess 105B. Thus, as a result of a multiple reflection action of light between the first surface S1 and the second surface S2 on the second light-diffusing sheet 43B, the brightness can be improved while maintaining the brightness uniformity.

On the second light-diffusing sheet 43B, the arrangement pitch of the first recesses 105B is 200 μm or more, and the depth H of the first recess 105B is preferably greater than the depth H of the second recess 105C. By providing large first recesses 105B having an inverted substantially square pyramid shape with an apex angle of 75° or more and 105° or less in this manner, the brightness uniformity can be further improved while suppressing brightness reductions, and as a result, the number of light-diffusing sheets 43 arranged in the backlight unit 40 can be reduced. For example, it is possible to arrange only the second light-diffusing sheet 43B as the light-diffusing sheet 43. Alternatively, even when the first light-diffusing sheet 43A is arranged together with the second light-diffusing sheet 43B, by making the depth of the recesses 105A of the first light-diffusing sheet 43A shallower than the depth of the first recesses 105B of the second light-diffusing sheet 43B, the first light-diffusing sheet 43A can be formed to be thin. As a result, the total thickness of the light-diffusing sheet 43 in the backlight unit 40 can be reduced.

Note that in this example, on the assumption that the color conversion sheet 44 is disposed on the upper side of the light-diffusing sheet 43 (between the display screen 50a and the light-diffusing sheet 43), the second light-diffusing sheet 43B is arranged such that the second surface S2 provided with the inverted pyramid-shaped second recesses 105C having an apex angle θ of 105° or more and 175° or less faces the color conversion sheet 44. In other words, the second light-diffusing sheet 43B is arranged such that the first surface S1 provided with the inverted pyramid-shaped first recesses 105B having an apex angle θ of 75° or more and 105° or less serves as the light entrance surface, and as a result, the brightness is improved while maintaining the brightness uniformity.

Meanwhile, likewise when the color conversion sheet 44 is disposed on the lower side of the light-diffusing sheet 43 (between the light-diffusing sheet 43 and the plurality of light sources 42), the second light-diffusing sheet 43B may be disposed such that the second surface S2 provided with the second recesses 105C faces the color conversion sheet 44. In other words, the brightness may be improved while maintaining the brightness uniformity by disposing the second light-diffusing sheet 43B with the first surface S1 provided with the first recesses 105B serving as the light emission surface.

Moreover, in this example, in order to obtain excellent brightness uniformity, the apex angle θ of the first recesses 105B of the second light-diffusing sheet 43B is set to 75° or more and 105° or less, and the apex angle θ of the second recesses 105C is set to 105° or more and 175° or less. However, it is also possible to improve the brightness while maintaining a practical level of brightness uniformity by setting the apex angle θ of the second recess 105C at 60° or more and 175° or less, and preferably 95° or more and 175° or less. Alternatively, by setting the apex angle θ of the first recesses 105B of the second light-diffusing sheet 43B at 80° or more and 100° or less and preferably 80° or more and 90° or less, and setting the apex angle θ of the second recesses 105C at 60° or more and 170° or less, preferably 100° or more and 170° or less, and more preferably 120° or more and 160° or less, the brightness can be improved while realizing particularly

excellent brightness uniformity. Alternatively, by setting the apex angle θ of the first recesses 105B of the second light-diffusing sheet 43B at 75° or more and 115° or less, preferably 80° or more and 110° or less, and more preferably 80° or more and 100° or less, and setting the apex angle θ of the second recesses 105C at 65° or more and 155° or less, preferably 70° or more and 150° or less, and more preferably 100° or more and 150° or less, the brightness can be further improved while securing a practical level of brightness uniformity.

<Manufacturing method of light-diffusing sheet>

The method for manufacturing the light-diffusing sheet 43 is not particularly limited, and for example, it is possible to manufacture the light-diffusing sheet 43 using any of the following manufacturing methods.

In one example of the manufacturing method for the first light-diffusing sheet 43A, first, a pellet-form base material resin (plastic resin) is formed into a resin film by an extrusion molding machine. Next, using a roll having convex pyramid shapes on the surface thereof as one of two metal rolls and using a roll having a flat shape or an inverted shape of a matte surface on the surface thereof as the other roll, the first light-diffusing sheet 43A having inverted pyramid shapes (the recesses 105A) on one surface and a flat surface or a matte surface on the other surface is manufactured by pressing the two rolls against the resin film. In this manufacturing method, the base material layer 101A and the light-diffusing layer 102A are formed integrally.

In another example of the manufacturing method for the first light-diffusing sheet 43A, first, the base material layer 101A having polyethylene terephthalate, for example, as the main component is prepared. While feeding the base material layer 101A between a pair of pressing rolls, a UV-curable resin (a resin composition for forming protrusions) is supplied to one surface of the base material layer 101A immediately before the pair of pressing rolls. A pressing roll having a plurality of substantially square pyramid-shaped protrusions on the outer peripheral surface thereof is used as the pressing roll on the side that comes into contact with the UV-curable resin. After pressing the pair of pressing rolls against the base material layer 101A to which the UV-curable resin has been supplied, the UV-curable resin is cured by UV irradiation, whereby a plurality of inverted pyramid shapes (the recesses 105A), which are inverted shapes of the plurality of substantially square pyramid-shaped protrusions, are transferred, and as a result, the first light-diffusing sheet 43A with the light-diffusing layer 102A provided on one surface of the base material layer 101A is manufactured. In this manufacturing method, the base material layer 101A and the light-diffusing layer 102A are formed separately.

In one example of the manufacturing method for the second light-diffusing sheet 43B, first, a pellet-form base material resin (plastic resin) is formed into a resin film by an extrusion molding machine. Next, using a roll having convex pyramid shapes that are inverted shapes of the first recesses 105B on the surface thereof as one of two metal rolls and using a roll having convex pyramid shapes that are inverted shapes of the second recesses 105C on the surface thereof as the other roll, the second light-diffusing sheet 43B having the inverted pyramid-shaped first recesses 105B on one surface and the inverted pyramid-shaped second recesses 105C on the other surface is manufactured by pressing the two rolls against the resin film. In this manufacturing method, the base material layer 101B, the first light-diffusing layer 102B, and the second light-diffusing layer 102C are formed integrally.

In another example of the manufacturing method for the second light-diffusing sheet 43B, first, the base material layer 101B having polyethylene terephthalate, for example, as the main component is prepared. While feeding the base material layer 101B between a pair of pressing rolls, a UV-curable resin (a resin composition for forming protrusions) is supplied to both surfaces of the base material layer 101B immediately before the pair of pressing rolls. A roll having a plurality of substantially square pyramid-shaped protrusions that are inverted shapes of the first recesses 105B on the outer peripheral surface thereof and a roll having a plurality of substantially square pyramid-shaped protrusions that are inverted shapes of the second recesses 105C on the outer peripheral surface thereof are used as the pair of pressing rolls. After pressing the pair of pressing rolls against the base material layer 101B to which the UV-curable resin has been supplied, the UV-curable resin is cured by UV irradiation, whereby the plurality of inverted pyramid-shaped first recesses 105B and second recesses 105C are transferred, and as a result, the second light-diffusing sheet 43B with the first light-diffusing layer 102B provided on one surface of the base material layer 101B and the second light-diffusing layer 102C provided on the other surface is manufactured. In this manufacturing method, the base material layer 101A, the first light-diffusing layer 102B, and the second light-diffusing layer 102C are formed separately.

<Features of the embodiment>

As described above, the second light-diffusing sheet 43B of this embodiment has the first surface S1 on which the plurality of inverted substantially square pyramid-shaped first recesses 105B are provided and the second surface S2 on which the plurality of inverted substantially square pyramid-shaped second recesses 105C are provided, the apex angle of the plurality of first recesses 105B is 75° or more and 105° or less, and the apex angle of the plurality of second recesses 105C is 105° or more and 175° or less.

According to the second light-diffusing sheet 43B of this embodiment, the brightness can be improved while

maintaining the brightness uniformity by the multiple reflection action of the light between the first surface S1 provided with the first recesses 105B having an inverted substantially square pyramid shape with an apex angle of 75° or more and 105° or less and the second surface S2 provided with the second recesses 105C having an inverted substantially square pyramid shape with an apex angle of 105° or more and 175° or less.

In the second light-diffusing sheet 43B of this embodiment, when the apex angle of the plurality of first recesses 105B is 80° or more and 100° or less, the brightness uniformity can be further improved.

In the second light-diffusing sheet 43B of this embodiment, when the apex angle of the plurality of second recesses 105C is 110° or more and 170° or less, and preferably 120° or more and 160° or less, the brightness uniformity can be further improved.

In the second light-diffusing sheet 43B of this embodiment, the arrangement pitch of the plurality of first recesses 105B may be 200 μm or more, and the depth of the plurality of first recesses 105B may be greater than the depth of the plurality of second recesses 105C. By providing large first recesses 105B having an inverted substantially square pyramid shape with an apex angle of 75° or more and 105° or less in this manner, it is possible to promote brightness uniformity while suppressing brightness reductions.

Note that in the second light-diffusing sheet 43B of this embodiment, the brightness can be improved while securing a practical level of brightness uniformity by setting the apex angle θ of the plurality of second recesses 105C at 60° or more and 175° or less, and preferably 95° or more and 175° or less. Alternatively, by setting the apex angle θ of the plurality of first recesses 105B at 75° or more and 115° or less and setting the apex angle θ of the plurality of second recesses 105C at 65° or more and 155° or less, the brightness can be further improved while securing a practical level of brightness uniformity.

The backlight unit 40 according to this embodiment is built into the liquid crystal display device 50, and guides the light emitted from the plurality of light sources 42 to the display screen 50a. The backlight unit 40 includes the second light-diffusing sheet 43B of this embodiment, which is provided between the display screen 50a and the light source 42. Thus, since a light-diffusing sheet that is capable of improving the brightness while maintaining the brightness uniformity is used, it is possible to display a bright screen with excellent brightness uniformity.

In the backlight unit 40 of this embodiment, the plurality of light sources 42 may be blue light sources, and the color conversion sheet 44 for converting the wavelength of the light may be provided between the display screen 50a and the plurality of light sources 42. Thus, the cost of the backlight unit 40 can be reduced as compared with a case in which white light sources are used. Note that when the color conversion sheet 44 is disposed between the display screen 50a and the light-diffusing sheet 43, the second light-diffusing sheet 43B is arranged with the second surface S2 facing the color conversion sheet 44 **(i.e.,** with the first surface S1 as the light entrance surface), whereby the brightness is improved while maintaining the brightness uniformity. Meanwhile, when the color conversion sheet 44 is arranged between the light-diffusing sheet 43 and the plurality of light sources 42, the second light-diffusing sheet 43B is arranged with the second surface S2 facing the color conversion sheet 44 (i.e., with the first surface S1 as the light emission surface), whereby the brightness is improved while maintaining the brightness uniformity.

In the backlight unit 40 according to this embodiment, the plurality of light sources 42 may be arranged on the reflective sheet 41, which is provided in the opposite direction to the display screen 50a as viewed from the light-diffusing sheet 43. Thus, the light is further diffused by multiple reflection between the light-diffusing sheet 43 and the reflective sheet 41, leading to a further improvement in the brightness uniformity.

The liquid crystal display device 50 according to this embodiment includes the backlight unit 40 according to this embodiment and the liquid crystal display panel 5. Thus, by using the backlight unit 40 of this embodiment, it is possible to display a bright screen with excellent brightness uniformity. Similar effects can also be obtained in an information apparatus (a personal computer, a cellular phone, or the like) into which the liquid crystal display device 50 of this embodiment is incorporated.

Note that in this embodiment, a direct-type backlight unit in which the plurality of light sources 42 are arranged in a distributed manner on the back surface of the display screen 50a of the liquid crystal display device 50 is used as the backlight unit 40. For this reason, in order to reduce the size of the liquid crystal display device 50, it is necessary to reduce the distance between the light sources 42 and the light-diffusing sheet 43 (the first light-diffusing sheet 43A closest to the light sources 42 in the example shown in FIG. 2). However, when this distance is reduced, for example, a phenomenon (brightness unevenness) in which the brightness of the parts of the display screen 50a positioned in areas between the light sources 42 arranged in a distributed manner becomes lower than that of other parts is more likely to occur. Hence, using the one or more light-diffusing sheets 43 including the second light-diffusing sheet 43B of this embodiment is useful for suppressing brightness unevenness. More specifically, when the distance between the light sources 42 and the light-diffusing sheet 43 (when a plurality of light-diffusing sheets 43 are used, the light-diffusing sheet 43 nearest to the light sources 42) is set at 10 mm or less, preferably 5 mm or less, more preferably 2 mm or less, even more preferably 1 mm or less, and ultimately 0 mm in anticipation of future reductions in the thickness of small and medium-sized liquid crystal displays, it is believed that the usefulness of the second light-diffusing sheet 43B of this embodiment will become even more pronounced. For example, even when a sufficient distance for achieving a thickness reduction cannot be secured

between the light sources and the sheet, such as when the distance between the light sources 42 and the light-diffusing sheet 43 is 0 mm or more and 1 mm or less, with the second light-diffusing sheet 43B of this embodiment, the brightness can be improved while maintaining the brightness uniformity.

<Examples>

Results obtained by evaluating the brightness and the brightness uniformity with respect to examples of the second light-diffusing sheet 43B are described below.

The brightness and the brightness uniformity were evaluated using the backlight configuration shown in FIG. 2.

More specifically, an LED array in which blue LED elements are arranged in a square array (with a pitch of around 2.8 mm × around 2.8 mm) was used as the plurality of light sources 42.

A polycarbonate sheet with a thickness of 190 μm was used as the first light-diffusing sheet 43A, the inverted pyramid-shaped recesses 105A having a depth of 107 μm and an apex angle of 80° were arranged on the first surface S1 in a two-dimensional matrix pattern at a pitch of 179 μm, and a matte surface with an arithmetic mean roughness Ra of 1.4 μm was used as the second surface S2. The first light-diffusing sheet 43A was arranged such that the first surface S1 faced the light sources 42, and such that the distance to the light sources 42 was substantially 0 mm.

The following samples were prepared as the second light-diffusing sheet 43B. In a comparative example, a polycarbonate sheet with a thickness of 400 μm was used, the inverted pyramid-shaped first recesses 105B having a depth of 298 μm and an apex angle of 80° were arranged on the first surface S1 in a two-dimensional matrix pattern at a pitch of 500 μm, and a matte surface with an arithmetic mean roughness Ra of 2.3 μm was used as the second surface S2. In a first example, a polycarbonate sheet with a thickness of 415 μm was used, the inverted pyramid-shaped first recesses 105B having a depth of 298 μm and an apex angle of 80° were arranged on the first surface S1 in a two-dimensional matrix pattern at a pitch of 500 μm, and the inverted pyramid-shaped second recesses 105C having a depth of 50 μm and an apex angle of 120° were arranged on the second surface S2 in a two-dimensional matrix pattern at a pitch of 173 μm. In a second example, a polycarbonate sheet with a thickness of 415 μm was used, the inverted pyramid-shaped first recesses 105B having a depth of 298 μm and an apex angle of 80° were arranged on the first surface S1 in a two-dimensional matrix pattern at a pitch of 500 μm, and the inverted pyramid-shaped second recesses 105C having a depth of 50 μm and an apex angle of 140° were arranged on the second surface S2 in a two-dimensional matrix pattern at a pitch of 275 μm. In a third example, a polycarbonate sheet with a thickness of 415 μm was used, the inverted pyramid-shaped first recesses 105B having a depth of 298 μm and an apex angle of 80° were arranged on the first surface S1 in a two-dimensional matrix pattern at a pitch of 500 μm, and the inverted pyramid-shaped second recesses 105C having a depth of 50 μm and an apex angle of 160° were arranged on the second surface S2 in a two-dimensional matrix pattern at a pitch of 567 μm. No diffusing agent was added to any of the samples. Further, in all of the samples, the arrangement directions of the first recesses 105B and the second recesses 105C were the same as the arrangement direction of the light sources 42. Furthermore, in all of the samples, the first surface S1 was arranged so as to face the light sources 42. Although there is a difference of 15 μm between the sheet thicknesses of the comparative example and the first to third examples, this is within a range in which there is substantially no effect on the optical performance.

A quantum dot (QD) sheet was used for the color conversion sheet 44.

A PET film with a thickness of 154 μm, onto which prisms with a height of 25 μm and an apex angle of 90° were shape-transferred using a UV-curable resin, was used as the first prism sheet 45. A PET film with a thickness of 151 μm, onto which prisms with a height of 25 μm and an apex angle of 90° were shape-transferred using a UV-curable resin, was used as the second prism sheet 46. The first prism sheet 45 and the second prism sheet 46 were arranged so that the respective prisms thereof were orthogonal to each other and the prisms of the second prism sheet 46 formed an angle of 40° with the arrangement direction of the light sources 42.

A PET film having a thickness of 135 μm and coated with beads was used as the upper light-diffusing sheet 47.

In the configurations described above, the brightness and the brightness uniformity were evaluated in the following manner in a state where a transparent glass plate was placed on the upper light-diffusing sheet 47 to prevent the sheets from floating up. First, using a two-dimensional color brightness meter SR-5000, manufactured by Topcon Technohouse Corp., the brightness (cd/m$^2$) upward in a vertical direction (a direction traveling from the LED array toward the glass plate) was measured. Next, an obtained two-dimensional brightness distribution image was corrected for variation in the emission intensity of the individual LEDs, filtering processing was executed to suppress bright spot and dark spot noise caused by foreign matter and the like, and then an average value and a standard deviation were calculated for the brightness of all of the pixels. Finally, the brightness and the brightness uniformity were calculated, with the "brightness" defined as "average value of brightness" and the "brightness uniformity" defined as "average value of brightness/standard deviation of brightness". The brightness and the brightness uniformity were calculated five times with respect to the same sample, and the brightness and the brightness uniformity were evaluated from the average values thereof.

As a result of evaluating the brightness and the brightness uniformity with respect to the second light-diffusing

sheet 43B of each of the comparative example and the first to third examples described above, using the comparative example as a reference, the brightness increased by around 3% in the first example, by around 2% in the second example, and by around 0.5% in the third embodiment, while the brightness uniformity was approximately the same in all of the samples.

The inventor of the present application also evaluated the brightness and the brightness uniformity using optical simulation software under similar evaluation conditions to those of the comparative example and the first to third examples, described above, with respect to the second light-diffusing sheet 43B while changing the apex angle of the first recesses 105B (the light entrance surface pyramids) from 60° to 170° and keeping the depth thereof fixed at 298 μm, and changing the apex angle of the second recesses 105C (the light emission surface pyramids) from 60° to 180° and keeping the depth thereof fixed at 107 μm. Note that in the optical simulation, the upper light-diffusing sheet 47 and the transparent glass plate provided thereon were not disposed. Results of evaluating the brightness and the brightness uniformity by optical simulation are shown in Tables 1 and 2, respectively. The brightness shown in Table 1 and the brightness uniformity shown in Table 2 respectively denote a relative brightness and a relative brightness uniformity relative to a brightness and a brightness uniformity of 100%, obtained in a case where the light emission surface is a mirror surface (i.e., when the apex angle of the light emission surface pyramids is 180°) and the highest brightness uniformity was obtained when the apex angle of the first recesses 105B (the light entrance surface pyramids) is 80°.

[Table 1]

| | | APEX ANGLE OF PYRAMIDS ON ENTRANCE SURFACE (°) | | | | | | | | | | | |
|---|---|---|---|---|---|---|---|---|---|---|---|---|---|
| | | 60 | 70 | 80 | 90 | 100 | 110 | 120 | 130 | 140 | 150 | 160 | 170 |
| APEX ANGLE OF PYRAMIDS ON EMISSION SURFACE (°) | 60 | 114% | 113% | 111% | 111% | 111% | 111% | 112% | 112% | 111% | 111% | 110% | 108% |
| | 70 | 113% | 113% | 112% | 111% | 111% | 111% | 110% | 110% | 110% | 110% | 109% | 107% |
| | 80 | 111% | 112% | 112% | 111% | 111% | 110% | 109% | 109% | 109% | 108% | 107% | 106% |
| | 90 | 111% | 111% | 111% | 111% | 111% | 110% | 109% | 108% | 107% | 106% | 106% | 104% |
| | 100 | 111% | 111% | 110% | 110% | 110% | 109% | 108% | 108% | 107% | 106% | 105% | 103% |
| | 110 | 111% | 111% | 110% | 109% | 108% | 108% | 108% | 107% | 106% | 105% | 105% | 103% |
| | 120 | 112% | 110% | 109% | 108% | 108% | 107% | 106% | 106% | 105% | 104% | 104% | 102% |
| | 130 | 112% | 110% | 107% | 106% | 106% | 106% | 106% | 105% | 104% | 104% | 103% | 101% |
| | 140 | 111% | 109% | 106% | 105% | 104% | 105% | 105% | 105% | 104% | 103% | 103% | 101% |
| | 150 | 110% | 108% | 105% | 103% | 102% | 103% | 104% | 104% | 104% | 104% | 104% | 103% |
| | 160 | 110% | 107% | 104% | 101% | 101% | 102% | 103% | 104% | 103% | 105% | 108% | 108% |
| | 170 | 109% | 106% | 102% | 99% | 99% | 101% | 102% | 103% | 104% | 106% | 114% | 117% |
| | 180 | 107% | 104% | 100% | 96% | 96% | 99% | 100% | 101% | 103% | 107% | 116% | 122% |

[Table 2]

| | | APEX ANGLE OF PYRAMIDS ON ENTRANCE SURFACE (° ) | | | | | | | | | | | |
|---|---|---|---|---|---|---|---|---|---|---|---|---|---|
| | | 60 | 70 | 80 | 90 | 100 | 110 | 120 | 130 | 140 | 150 | 160 | 170 |
| APEX ANGLE OF PYRAMIDS ON EMISSION SURFACE (° ) | 60 | 61% | 74% | 90% | 92% | 85% | 81% | 72% | 66% | 67% | 59% | 55% | 62% |
| | 70 | 69% | 83% | 87% | 90% | 90% | 89% | 88% | 76% | 72% | 68% | 63% | 70% |
| | 80 | 77% | 85% | 85% | 93% | 92% | 85% | 89% | 86% | 80% | 71% | 67% | 67% |
| | 90 | 75% | 80% | 85% | 92% | 98% | 93% | 89% | 82% | 80% | 70% | 62% | 67% |
| | 100 | 72% | 85% | 93% | 95% | 98% | 92% | 88% | 79% | 75% | 68% | 62% | 66% |
| | 110 | 67% | 84% | 96% | 108% | 99% | 95% | 83% | 76% | 80% | 66% | 62% | 67% |
| | 120 | 63% | 87% | 117% | 109% | 108% | 95% | 83% | 72% | 73% | 64% | 59% | 63% |
| | 130 | 60% | 83% | 112% | 113% | 110% | 90% | 78% | 67% | 68% | 58% | 55% | 57% |
| | 140 | 57% | 80% | 106% | 113% | 102% | 88% | 74% | 63% | 66% | 51% | 48% | 53% |
| | 150 | 55% | 84% | 117% | 100% | 100% | 91% | 73% | 59% | 59% | 50% | 46% | 49% |
| | 160 | 55% | 84% | 109% | 116% | 107% | 82% | 68% | 56% | 57% | 47% | 44% | 51% |
| | 170 | 53% | 81% | 111% | 104% | 101% | 75% | 65% | 51% | 54% | 45% | 45% | 51% |
| | 180 | 51% | 85% | 100% | 97% | 94% | 71% | 62% | 50% | 51% | 43% | 45% | 51% |

As shown in Tables 1 and 2, by setting the first recesses 105B (the light entrance surface pyramids) to be larger than 70° and smaller than 110° and setting the second recesses 105C (the light emission surface pyramids) to be larger than 100° and smaller than 180°, it was possible to set the relative brightness and the relative brightness uniformity to around 100% or more. More specifically, by setting the first recesses 105B (light entrance surface pyramids) at 80° or more and 100° or less and setting the second recesses 105C (the light emission surface pyramids) at 110° or more and 170° or less, and preferably 120° or more and 160° or less, excellent brightness uniformity was obtained.

Further, as shown in Tables 1 and 2, by providing the first recesses 105B (the light entrance surface pyramids) to be deep (i.e., large), it was possible to promote brightness uniformity while suppressing brightness reductions.

As shown in Tables 1 and 2, by setting the apex angle $\theta$ of the first recesses 105B (the light entrance surface pyramids) to 75° or more and 105° or less and setting the second recesses 105C (the light emission surface pyramids) to 60° or more (preferably larger than 90°) and smaller than 180°, the brightness can be improved while securing a practical level of brightness uniformity. Moreover, as shown in Tables 1 and 2, by setting the apex angle $\theta$ of the first recesses 105B (the light entrance surface pyramids) to 80° or more and 100° or less (preferably 80° or more and 90° or less) and setting the apex angle $\theta$ of the second recesses 105C (the light emission surface pyramids) to 60° or more and 170° or less (preferably 100° or more and 170° or less, and more preferably 120° or more and 160° or less), the brightness can be improved while achieving particularly excellent brightness uniformity. Furthermore, by setting the apex angle $\theta$ of the first recesses 105B (the light entrance surface pyramids) to be larger than 70° and smaller than 120° (preferably 80° or more and 110° or less, and more preferably 80° or more and 100° or less) and setting the apex angle $\theta$ of the second recesses 105C (the light emission surface pyramids) to be larger than 60° and smaller than 160° (preferably 70° or more and 150° or less, and more preferably 100° or more and 150° or less), the brightness can be further improved while securing a practical level of brightness uniformity.

From the above results, the effectiveness of the second light-diffusing sheet 43B of this embodiment having pyramids on both surfaces, i.e., the first recesses 105B (the light entrance surface pyramids) and the second recesses 105C (the light emission surface pyramids), is shown.

(Other embodiments)

While an embodiment (including examples; likewise hereinafter) of the present disclosure was described above, the present disclosure is not solely limited to the above embodiment, and various modifications can be made within the scope of the disclosure. In other words, the foregoing description of the embodiment is illustrative in nature and is not intended to limit the present disclosure, its applications, or its uses.

Reference Signs List

| | |
|---|---|
| 1 | TFT substrate |
| 2 | CF substrate |
| 3 | Liquid crystal layer |
| 5 | Liquid crystal display panel |
| 6 | First polarizing plate |
| 7 | Second polarizing plate |
| 40 | Backlight unit |
| 41 | Reflective sheet |
| 42 | Light source |
| 43 | Light-diffusing sheet |
| 43A | First light-diffusing sheet |
| 43B | Second light-diffusing sheet |
| 44 | Color conversion sheet |
| 45 | First prism sheet |
| 46 | Second prism sheet |
| 47 | Upper light-diffusing sheet |
| 50 | Liquid crystal display device |
| 50a | Display screen |
| 101, 101A, 101 | BBase material layer |
| 102, 102A, 102B, 102C | Light-diffusing layer |
| 105, 105A, 105B, 105C | Recess |

**Claims**

1. A light-diffusing sheet (43B) having a first surface (S1) on which a plurality of first recesses (105B) with an inverted substantially square pyramid shape are provided, and a second surface (S2) on which a plurality of second recesses (105C) with an inverted substantially square pyramid shape are provided,

   wherein an apex angle of the plurality of first recesses (105B) is 75° or more and 105° or less, and
   an apex angle of the plurality of second recesses (105C) is 105° or more and 175° or less,
   wherein,
   the first surface (S1) is a light entrance surface and the second surface (S2) is a light emission surface, and
   the apex angle of the plurality of second recesses (105C) is greater than the apex angle of the plurality of first recesses (105B).

2. The light-diffusing sheet (43B) according to claim 1,
   wherein the apex angle of the plurality of first recesses (105B) is 80° or more and 100° or less.

3. The light-diffusing sheet (43B) according to claim 1,
   wherein the apex angle of the plurality of second recesses (105C) is 110° or more and 170° or less.

4. The light-diffusing sheet (43B) according to claim 1,

   wherein the arrangement pitch of the plurality of first recesses (105B) is 200 μm or more, and
   the depth of the plurality of first recesses (105B) is greater than the depth of the plurality of second recesses (105C).

5. A light-diffusing sheet (43B) having a first surface (S1) on which a plurality of first recesses (105B) with an inverted substantially square pyramid shape are provided, and a second surface (S2) on which a plurality of second recesses (105C) with an inverted substantially square pyramid shape are provided,

wherein an apex angle of the plurality of first recesses (105B) is 75° or more and 105° or less, and
an apex angle of the plurality of second recesses (105C) is 95° or more and 175° or less,
wherein,
the first surface (S1) is a light entrance surface and the second surface (S2) is a light emission surface, and
the apex angle of the plurality of second recesses (105C) is greater than the apex angle of the plurality of first recesses (105B).

6. A light-diffusing sheet (43B) having a first surface (S1) on which a plurality of first recesses (105B) with an inverted substantially square pyramid shape are provided, and a second surface (S2) on which a plurality of second recesses (105C) with an inverted substantially square pyramid shape are provided,

wherein an apex angle of the plurality of first recesses (105B) is 75° or more and 115° or less, and
an apex angle of the plurality of second recesses (105C) is 100° or more and 155° or less,
wherein,
the first surface (S1) is a light entrance surface and the second surface (S2) is a light emission surface, and
the apex angle of the plurality of second recesses (105C) is greater than the apex angle of the plurality of first recesses (105B).

7. A backlight unit (40) built into a liquid crystal display device for guiding light emitted from a plurality of light sources (42) toward a display screen (50a),
the backlight unit (40) comprising the light-diffusing sheet (43B) according to any one of claims 1 to 6, which is provided between the display screen (50a) and the plurality of light sources (42).

8. The backlight unit (40) according to claim 7,

wherein the plurality of light sources (42) are blue light sources, and
a color conversion sheet that converts the wavelength of the light is provided between the display screen (50a) and the plurality of light sources (42).

9. The backlight unit (40) according to claim 8,

wherein the color conversion sheet is disposed between the display screen (50a) and the light-diffusing sheet (43B), and
the light-diffusing sheet (43B) is arranged with the second surface (S2) facing the color conversion sheet.

10. A liquid crystal display device (50) comprising:

the backlight unit (40) according to claim 7; and
a liquid crystal display panel(5).

11. An information apparatus comprising the liquid crystal display device (50) according to claim 10.

**Patentansprüche**

1. Lichtstreuungsfolie (43B) mit einer ersten Oberfläche (S1), auf der eine Vielzahl von ersten Vertiefungen (105B) mit der Form einer umgekehrten, im Wesentlichen quadratischen Pyramide bereitgestellt sind, und einer zweiten Oberfläche (S2), auf der eine Vielzahl von zweiten Vertiefungen (105C) mit der Form einer umgekehrten, im Wesentlichen quadratischen Pyramide bereitgestellt sind,

wobei ein Scheitelwinkel der Vielzahl von ersten Vertiefungen (105B) 75° oder mehr und 105° oder weniger beträgt und
ein Scheitelwinkel der Vielzahl von zweiten Vertiefungen (105C) 105° oder mehr und 175° oder weniger beträgt,
wobei

die erste Oberfläche (S1) eine Lichteintrittsfläche und die zweite Oberfläche (S2) eine Lichtaustrittsfläche ist, und der Scheitelwinkel der Vielzahl von zweiten Vertiefungen (105C) größer ist als der Scheitelwinkel der Vielzahl von ersten Vertiefungen (105B).

2. Lichtstreuungsfolie (43B) nach Anspruch 1, wobei der Scheitelwinkel der Vielzahl von ersten Vertiefungen (105B) 80° oder mehr und 100° oder weniger beträgt.

3. Lichtstreuungsfolie (43B) nach Anspruch 1, wobei der Scheitelwinkel der Vielzahl von zweiten Vertiefungen (105C) 110° oder mehr und 170° oder weniger beträgt.

4. Lichtstreuungsfolie (43B) nach Anspruch 1,

wobei der Anordnungsabstand der Vielzahl von ersten Vertiefungen (105B) 200 μm oder mehr beträgt und
die Tiefe der Vielzahl von ersten Vertiefungen (105B) größer ist als die Tiefe der Vielzahl von zweiten Vertiefungen (105C).

5. Lichtstreuungsfolie (43B) mit einer ersten Oberfläche (S1), auf der eine Vielzahl von ersten Vertiefungen (105B) mit der Form einer umgekehrten, im Wesentlichen quadratischen Pyramide bereitgestellt sind, und einer zweiten Oberfläche (S2), auf der eine Vielzahl von zweiten Vertiefungen (105C) mit der Form einer umgekehrten, im Wesentlichen quadratischen Pyramide bereitgestellt sind,

wobei ein Scheitelwinkel der Vielzahl von ersten Vertiefungen (105B) 75° oder mehr und 105° oder weniger beträgt und
ein Scheitelwinkel der Vielzahl von zweiten Vertiefungen (105C) 95° oder mehr und 175° oder weniger beträgt, wobei
die erste Oberfläche (S1) eine Lichteintrittsfläche und die zweite Oberfläche (S2) eine Lichtaustrittsfläche ist, und der Scheitelwinkel der Vielzahl von zweiten Vertiefungen (105C) größer ist als der Scheitelwinkel der Vielzahl von ersten Vertiefungen (105B).

6. Lichtstreuungsfolie (43B) mit einer ersten Oberfläche (S1), auf der eine Vielzahl von ersten Vertiefungen (105B) mit der Form einer umgekehrten, im Wesentlichen quadratischen Pyramide bereitgestellt sind, und einer zweiten Oberfläche (S2), auf der eine Vielzahl von zweiten Vertiefungen (105C) mit der Form einer umgekehrten, im Wesentlichen quadratischen Pyramide bereitgestellt sind,

wobei ein Scheitelwinkel der Vielzahl von ersten Vertiefungen (105B) 75° oder mehr und 115° oder weniger beträgt und
ein Scheitelwinkel der Vielzahl von zweiten Vertiefungen (105C) 100° oder mehr und 155° oder weniger beträgt, wobei
die erste Oberfläche (S1) eine Lichteintrittsfläche und die zweite Oberfläche (S2) eine Lichtaustrittsfläche ist, und

der Scheitelwinkel der Vielzahl von zweiten Vertiefungen (105C) größer ist als der Scheitelwinkel der Vielzahl von ersten Vertiefungen (105B).

7. In eine Flüssigkristall-Vorrichtung eingebaute Hintergrundbeleuchtungseinheit (40) zum Leiten von Licht, das von Vielzahl von Lichtquellen (42) emittiert wird, in Richtung eines Anzeigebildschirms (50a), wobei die Hintergrundbeleuchtungseinheit (40) die Lichtstreuungsfolie (43B) gemäß einem der Ansprüche 1 bis 6 umfasst, die zwischen dem Anzeigebildschirm (50a) und der Vielzahl von Lichtquellen (42) bereitgestellt wird.

8. Hintergrundbeleuchtungseinheit (40) nach Anspruch 7,

wobei die Vielzahl von Lichtquellen (42) Blaulichtquellen sind und
eine Farbkonversionsfolie, die die Wellenlänge des Lichts umwandelt, zwischen dem Bildschirm (50a) und den Vielzahl von Lichtquellen (42) bereitgestellt wird.

9. Hintergrundbeleuchtungseinheit (40) nach Anspruch 8,

wobei die Farbkonversionsfolie zwischen dem Bildschirm (50a) und der Lichtstreuungsfolie (43B) angeordnet ist

und
die Lichtstreuungsfolie (43B) so angeordnet ist, dass ihre zweite Oberfläche (S2) der Farbkonversionsfolie zugewandt ist.

**10.** Flüssigkristallanzeigevorrichtung (50), die umfasst:

die Hintergrundbeleuchtungseinheit (40) gemäß Anspruch 7; und
ein Flüssigkristallanzeigepanel (5).

**11.** Informationsgerät, das die Flüssigkristallanzeigevorrichtung (50) gemäß Anspruch 10 umfasst.

**Revendications**

**1.** Une feuille (43B) de diffusion de lumière présentant une première surface (S1), sur laquelle sont prévus une pluralité de premiers évidements (105B) ayant la forme d'une pyramide sensiblement carrée renversée, et une deuxième surface (S2), sur laquelle sont prévus une pluralité de deuxièmes évidements (105C) ayant la forme d'une pyramide sensiblement carrée renversée,

dans laquelle l'angle au sommet des évidements de la pluralité de premiers évidements (105B) est de 75° ou plus et de 105° ou moins, et
l'angle au sommet des évidements de la pluralité de deuxièmes évidements (105C) est de 105° ou plus et de 175° ou moins,
dans laquelle
la première surface (S1) est une surface d'entrée de lumière et la deuxième surface (S2) est une surface d'émission de lumière, et
l'angle au sommet des évidements de la pluralité de deuxièmes évidements (105C) est supérieur à l'angle au sommet des évidements de la pluralité de premiers évidements (105B).

**2.** La feuille (43B) de diffusion de lumière selon la revendication 1,
dans laquelle l'angle au sommet des évidements de la pluralité de premiers évidements (105B) est de 80° ou plus et de 100° ou moins.

**3.** La feuille (43B) de diffusion de lumière selon la revendication 1,
dans laquelle l'angle au sommet des évidements de la pluralité de deuxièmes évidements (105C) est de 110° ou plus et de 170° ou moins.

**4.** La feuille (43B) de diffusion de lumière selon la revendication 1,

dans laquelle le pas d'agencement de la pluralité de premiers évidements (105B) est de 200 μm ou plus, et
la profondeur des évidements de la pluralité de premiers évidements (105B) est supérieure à la profondeur des évidements de la pluralité de deuxièmes évidements (105C).

**5.** Une feuille (43B) de diffusion de lumière présentant une première surface (S1) sur laquelle sont prévus une pluralité de premiers évidements (105B) ayant la forme d'une pyramide sensiblement carrée renversée, et une deuxième surface (S2) sur laquelle sont prévus une pluralité de deuxièmes évidements (105C) ayant la forme d'une pyramide sensiblement carrée renversée,

dans laquelle l'angle au sommet des évidements de la pluralité de premiers évidements (105B) est de 75° ou plus et de 105° ou moins, et
l'angle au sommet des évidements de la pluralité de deuxièmes évidements (105C) est de 95° ou plus et de 175° ou moins,
dans laquelle
la première surface (S1) est une surface d'entrée de lumière et la deuxième surface (S2) est une surface d'émission de lumière, et
l'angle au sommet des évidements de la pluralité de deuxièmes évidements (105C) est supérieur à l'angle au sommet des évidements de la pluralité de premiers évidements (105B).

**6.** Une feuille (43B) de diffusion de lumière présentant une première surface (S1) sur laquelle sont prévus une pluralité de premiers évidements (105B) ayant la forme d'une pyramide sensiblement carrée renversée, et une deuxième surface (S2) sur laquelle sont prévus une pluralité de deuxièmes évidements (105C) ayant la forme d'une pyramide sensiblement carrée renversée,

dans laquelle l'angle au sommet des évidements de la pluralité de premiers évidements (105B) est de 75° ou plus et de 115° ou moins, et
l'angle au sommet des évidements de la pluralité de deuxièmes évidements (105C) est de 100° ou plus et de 155° ou moins,
dans laquelle
la première surface (S1) est une surface d'entrée de lumière et la deuxième surface (S2) est une surface d'émission de lumière, et
l'angle au sommet des évidements de la pluralité de deuxièmes évidements (105C) est supérieur à l'angle au sommet des évidements de la pluralité de premiers évidements (105B).

**7.** Une unité de rétroéclairage (40) intégrée à un dispositif d'affichage à cristaux liquides pour guider la lumière émise par une pluralité de sources lumineuses (42) vers un écran d'affichage (50a),
l'unité de rétroéclairage (40) comprenant la feuille (43B) de diffusion de lumière selon l'une quelconque des revendications 1 à 6, qui est agencée entre l'écran d'affichage (50a) et la pluralité de sources lumineuses (42).

**8.** L'unité de rétroéclairage (40) selon la revendication 7,

dans laquelle les sources lumineuses (42) sont des sources de lumière bleue, et
une feuille de conversion de couleur qui convertit la longueur d'onde de la lumière est agencée entre l'écran d'affichage (50a) et la pluralité de sources lumineuses (42).

**9.** L'unité de rétroéclairage (40) selon la revendication 8,

dans laquelle la feuille de conversion de couleur est disposée entre l'écran d'affichage (50a) et la feuille (43B) de diffusion de lumière, et
la feuille (43B) de diffusion de lumière est agencée de telle sorte que sa deuxième surface (S2) soit tournée vers la feuille de conversion de couleur.

**10.** Un dispositif (50) d'affichage à cristaux liquides comprenant :

l'unité de rétroéclairage (40) selon la revendication 7 ; et
un panneau d'affichage à cristaux liquides (5).

**11.** Un appareil d'information comprenant le dispositif (50) d'affichage à cristaux liquides selon la revendication 10.

50
50a
7
2
3
5
1
6
40

FIG. 1

40
47
46
45
44
105(105C)
43(43B)
105(105B)
43(43A)
105(105A)
42
41
S2
102C
101B
102B
S2
101A
102A
S1

FIG. 2

43A
S2
101A
102A
105A
S1

FIG. 3

43B
105C
S2
102C
101B
102B
105B
S1

FIG. 4

43
102
105
111
112
112

FIG. 5

105
111
112
111
P
111
105
θ
H
102
112

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011076115 A
- EP 2058680 A1
- JP 2022183047 A